(19) Europäisches Patentamt

European Patent Office

Office européen des brevets

(11) Numéro de publication: **0 281 896 B1**

(12) **FASCICULE DE BREVET EUROPEEN**

(45) Date de publication de fascicule du brevet: **06.05.92**   (51) Int. Cl.⁵: **H02G  15/14**

(21) Numéro de dépôt: **88103041.5**

(22) Date de dépôt: **01.03.88**

(54) **Jonction souple pour cable sous-marin au papier imprégné.**

(30) Priorité: **04.03.87 FR 8702929**

(43) Date de publication de la demande:
**14.09.88 Bulletin  88/37**

(45) Mention de la délivrance du brevet:
**06.05.92 Bulletin  92/19**

(84) Etats contractants désignés:
**DE ES FR GB IT SE**

(56) Documents cités:
**EP-A- 0 113 053**
**DE-C- 683 808**
**GB-A- 489 798**
**GB-A- 2 149 981**

(73) Titulaire: **ALCATEL CABLE**
**30, rue des Chasses**
**F-92111 Clichy Cédex(FR)**

(72) Inventeur: **Fosse, Raymond**
**1 impasse Lardillet**
**F-69230 Saint Genis Laval(FR)**
Inventeur: **Thevenon, Henri**
**288 rue André Philip**
**F-69003 Lyon(FR)**

(74) Mandataire: **Weinmiller, Jürgen et al**
**Lennéstrasse 9 Postfach 24**
**W-8133 Feldafing(DE)**

**Description**

La présente invention concerne une jonction souple pour un câble sous-marin multipolaire dont les conducteurs sont isolés par du papier imprégné d'huile, notamment du type à double armure.

Les câbles d'énergie comportent souvent des conducteurs isolés par rubans de papier imprégnés d'huile maintenue sous pression et protégés par une gaine étanche en plomb ou en aluminium. La pression d'huile est de l'ordre de 15 bars, pour des câbles destinés à la pose en mer à des profondeurs de l'ordre d'une centaine de mètres, de manière à compenser la perte de charge dans le canal d'huile et à équilibrer la pression statique à laquelle sera soumis le câble au fond de l'eau.

Les câbles du type à double armure sont tels que la gaine étanche en plomb ou en aluminium est entourée par deux armures coaxiales une armure interne et une armure externe. L'armure interne, dite de traction ou porteuse, est fréquemment constituée par une nappe de fils d'acier enroulés autour de la gaine avec un pas long, tandis que l'armure externe, dite de protection, est souvent constituée de fils d'acier enroulés avec un pas court.

Lorsqu'on est amené à réaliser une jonction entre deux tronçons de câble, on peut procéder de plusieurs façons. Une de ces solutions consiste à enfermer les branchements entre les différents conducteurs électriques dans un boîtier rigide soudé sur les gaines étanches des deux tronçons de câble à raccorder. On met ensuite l'intérieur du boîtier rigide sous pression d'huile, et on termine la jonction par toutes les couches de protection nécessaires autour du boîtier et autour des gaines étanches à proximité du boîtier. Cette solution convient pour effectuer des réparations ou pour connecter deux tronçons de câble destinés à rester au fond de la mer, mais présente l'inconvénient de gêner des manipulations éventuelles du câble pour le déplacer ou le remonter du fond vers la surface. En effet, la présence d'un boîtier rigide rend difficile son enroulement autour d'un touret, ou dans la cale d'un bateau

Il est connu par ailleurs, par le document FR-A2 555 372 ou GB-A 2 149 981 notamment, de réaliser une jonction souple pour câbles sous-marins du type ci-dessus en substituant aux gaines étanches en plomb ou en aluminium, au niveau de la jonction, une enveloppe cylindrique à parois ondulées soudée sur celles-ci par l'intermédiaire de pièces de raccordement rigides. Cependant, l'augmentation du diamètre hors-tout du câble au niveau de la jonction reste importante, et ce type de jonction ne convient pas pour un câble sous-marin à double armure, notamment ceux dont l'armure extérieure, dite de protection, est à pas très court.

La présente invention vise à proposer une jonction souple pour un câble sous-marin au papier imprégné et comportant au moins une armure, dont le diamètre hors-tout est inférieur à ce qui existe dans l'art antérieur, et pouvant subir les mêmes manipulations que le câble, en mer ou en usine.

Selon la présente invention, une jonction souple pour un câble sous-marin du type comportant des conducteurs isolés par du papier imprégné d'huile sous pression dans une gaine étanche protégée par au moins une armure de fils d'acier comprend une gaine flexible raccordée, de part et d'autre de la zone de branchement desdits conducteurs, à deux manchons de raccordement rigide engagés chacun autour d'une bague de centrage soudée sur la gaine étanche du câble et audit manchon, ladite gaine flexible étant divisée en deux tronçons raccordés entre eux au moyen d'une bague intérieure à laquelle ils sont soudés, ladite gaine flexible étant recouverte d'une coquille tubulaire formant gaine étanche soudée de chaque côté sur chacun desdits manchons de raccordement, lesdits manchons comportant au moins un orifice obturable au moyen d'un bouchon pour la mise sous pression d'huile de la jonction

Avantageusement, et dans le souci de réduire le diamètre hors-tout de la jonction, lesdits branchements entre conducteurs sont décalés les uns des autres le long de l'axe longitudinal de la jonction. Les branchements entre les conducteurs peuvent être réalisés par brasage ou au moyen de serre-fils

De préférence, le câble comporte deux armures coaxiales, une armure interne à pas long et une armure externe à pas court. L'armure interne est destinée à donner au câble une bonne résistance à la traction. L'armure externe empêche que le câble soit endommagé par les ancres marines, les engins de pêche ou les fonds rocheux

L'armure interne à pas long, constituée de fils d'acier en nappe enroulés autour de la gaine étanche avec un pas long, est reconstituée autour de la jonction en raccordant entre eux lesdits fils d'acier au moyen de ridoirs à pas inverses, ou tendeurs à filetages droite-gauche, tels ceux décrits dans lesdocumensFr-A 2 537 357 ou US-A 4 495 379.

L'armure externe, à pas court, est coupée de part et d'autre de la jonction au-delà desdits manchons et est remplacée le long de la jonction par un ressort hélicoïdal à pas court qui la recouvre sur une certaine longueur. Ce ressort est avantageusement réalisé avec le même fil d'acier que l'armure interne. Il peut être constitué de plusieurs parties d'égale longueur raccordées entre elles par soudure après mise en place.

Entre chacune des couches principales telles que décrites ci-dessus, on peut trouver des couches intermédiaires telles que feuillards, bourrages coniques ou cylindriques de rattrapage de diamètre ou de protection, frettes, etc. Ainsi, un feuillard de protection peut être interposé entre ladite gaine flexible et ladite coquille tubulaire formant gaine étanche. De même, la coquille tubulaire peut être frettée afin d'améliorer sa résistance à la pression interne.

Selon une mode de réalisation avantageux de l'invention, ladite gaine flexible est métallique et peut être formée d'un feuillard hélicoïdal agrafé, par exemple appelé tube "interlock" par l'homme de l'art.

Lorsque ladite gaine flexible est d'un tel type, il est alors avantageux de prévoir des filetages sur lesdits manchons et sur ladite bague intérieure, les pas de ces filetages correspondant au pas de l'enroulement de feuillard hélicoïdal agrafé de la gaine flexible. En effet, cette disposition facilite la mise en place des différents éléments avant soudage.

D'autres avantages de la présente invention apparaîtront mieux à la lecture de la description suivante donnée à titre d'exemple non limitatif des formes possibles de réalisation de l'invention, en regard des dessins ci-joints, et qui fera bien comprendre comment l'invention peut être réalisée.

Sur les dessins:

la figure 1 est une représentation schématique d'ensemble, en coupe longitudinale, d'une jonction selon l'invention;

la figure 2 est une vue partielle de détail en demi-coupe longitudinale de la jonction de la figure 1;

la figure 3 est une autre vue partielle de détail en demi-coupe longitudinale de la jonction de la figure 1;

la figure 4 est une vue en arraché de la partie centrale d'une jonction selon l'invention,

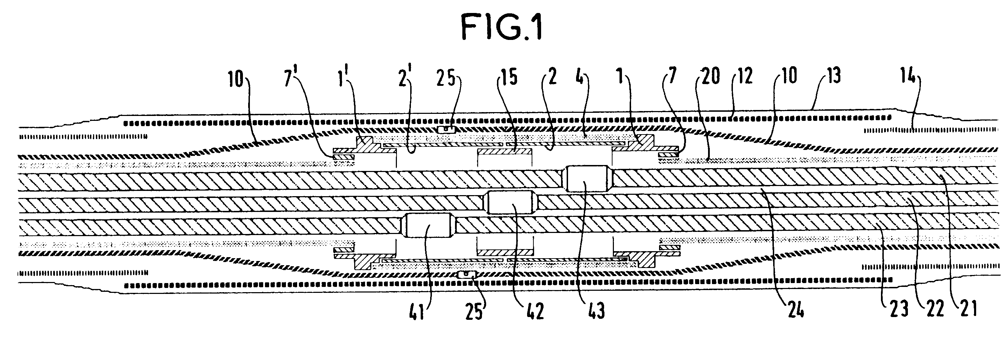

La figure 1 est une vue schématique d'ensemble sensiblement centrée sur une jonction selon l'invention. Aux extrémités de cette figure, c'est-à-dire de part et d'autre de cette jonction, un câble sous-marin comporte trois conducteurs électriques 21, 22, 23, qui sont isolés les uns des autres par du papier imprégné d'huile sous pression 24. L'âme des conducteurs est cachée par le papier enroulé, et pour la clarté du dessin, les conducteurs ont été représentés les uns au-dessus des autres. Dans la réalité, ils sont souvent enroulés les uns autour des autres avec un pas long. L'huile sous pression 24 dans laquelle baignent les conducteurs est contenue dans une gaine étanche 20. De la gaine étanche vers l'extérieur du câble, on trouve ensuite principalement une armure interne à pas long 10, une armure externe à pas court 14 et un bitord extérieur 13 de finition du câble

Rappelons que la figure 1 est schématique, et que les proportions dimensionnelles des différents éléments representés peuvent être différentes. A titre d'exemple, pour un câble tripolaire à double armure de diamètre extérieur 130 mm, la jonction aura un diamètre de 160 mm et une longueur de 11 m.

Pour réaliser les branchements décalés 41, 42, 43 des conducteurs 21, 22, 23 avec d'autres conducteurs similaires, la gaine étanche 20 et les armures interne et externe 10, 14 ainsi que le bitord 13 ont du être dégagés sur des longueurs respectivement en ordre croissant. Seule l'armure interne 10 n'a pas été supprimée : on l'a coupée au voisinage du milieu de la jonction avant de la dérouler afin de pouvoir la reconstituer ultérieurement en raccordant les fils d'acier qui la composent au moyen de ridoirs à pas inverses ou tendeurs à filetages droite-gauche 25, tels que décrits dans le document FR-A 2 537 357.

Chacune des deux extrémités libres de la gaine étanche 20 est équipée d'une bague de centrage extérieure 7, 7' soudée sur la gaine 20, autour de laquelle bague on peut engager un manchon de raccordement 1, 1'. Les deux manchons 1 et 1' sont reliés par une gaine flexible 2, de préférence en deux tronçons 2, 2'. Chaque tronçon de gaine est rendu solidaire du manchon correspondant. Les deux tronçons de gaine flexible 2, 2' sont raccordés ensemble au milieu de la jonction à l'aide d'une bague intérieure 15 qu'ils recouvrent chacun d'un côté sur une certaine longueur avant d'être soudés ensemble. Autour de ladite gaine flexible, on trouve une coquille 4 formant gaine étanche, soudée en ses extrémités aux deux manchons de raccordement 1, 1'.

Les extrémités des armures externes 14 sont raccordées par un ressort hélicoïdal 12, qui les recouvre sur une certaine longueur. Enfin, le bitord 13 du câble est reconstitué ou prolongé autour de la jonction.

Selon la présente invention, ladite gaine flexible 2 est avantageusement formée d'un feuillard enroulé agrafé, du type de celles que l'on utilise pour les armures des câbles des pompes immergées. Il existe un tel type de tube souple appelé tube "interlock" par l'homme de l'art. A titre indicatif, les gaines métalliques souples qui équipent parfois les tuyaux de douches de certains appareils sanitaires sont souvent des gaines de ce type. Si les manchons 1, 1' et la bague 15 sont munis de filetages adaptés au pas d'enroulement dudit feuillard enroulé agrafé, les deux tronçons de ladite gaine flexible 2, 2' peuvent être vissés sur lesdits manchons de raccordement 1, 1' et ladite bague intérieure 15, afin de faciliter les mises en place avant soudage.

En effet, lorsque la jonction des conducteurs est terminée, les deux tronçons de ladite gaine flexible sont soudés à ladite bague intérieure 15 et auxdits manchons de raccordement 1, 1′. De même, de chaque côté de la jonction, le manchon 1 ou 1′, la bague de centrage 7 ou 7′ et l'extrémité de la gaine étanche 20 sont également soudés ensemble.

Ladite coquille 4 formant gaine d'étanchéité au niveau de la jonction est avantageusement en plomb et formée d'un tube fendu selon une génératrice et refermé par une soudure longitudinale après mise en place.

De chacun des deux côtés de la jonction, ladite gaine étanche 20 est débarrassée temporairement de l'armure interne 10 sur une longueur telle qu'il soit possible d'emmancher autour de ladite gaine étanche 20 le tronçon correspondant de ladite gaine flexible 2 et avoir ainsi accès aux conducteurs 21, 22, 23 sur une longueur suffisante, permettant notamment de décaler leurs branchements respectifs les uns des autres suivant l'axe longitudinal de la jonction, ce qui est favorable à l'obtention d'une jonction de faible diamètre hors-tout.

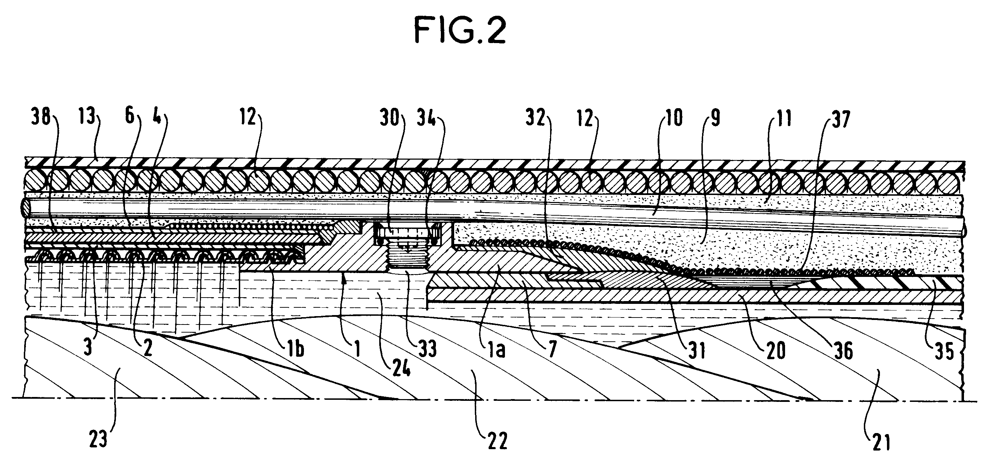

Sur la figure 2, on a représenté un détail de la jonction de la figure 2, en demi-coupe longitudinale autour d'un des manchons 1. Sur cette figure, les proportions des différents éléments peuvent correspondre à une réalisation pratique . On retrouve les conducteurs 21, 22, 23 isolés par le papier imprégné dans l'huile sous pression 24. Le manchon 1 comprend un cylindre creux central prolongé axialement à ses extrémités par un premier 1a et un deuxième 1b cylindres creux de même diamètre intérieur que lui mais de diamètres extérieurs moindres. Ledit premier cylindre 1a se termine extérieurement par un cône Ledit deuxième cylindre 1b comporte en son extrémité libre un décrochement situé radialement à l'extérieur. La partie axiale de ce décrochement est filetée au pas de ladite gaine flexible 2 de type interlock, ce qui permet de la visser sur ledit manchon. Ledit cylindre creux central est percé radialement d'un orifice 33 obturable au moyen d'un bouchon à vis 30 comprimant un joint 34 en position fermée. Cet orifice permet de procéder au traitement de la jonction, qui comprend une phase de mise sous vide pour vérifier son étanchéité, et une phase de remplissage d'huile sous pression, après quoi le bouchon est mis en place puis soudé sur le manchon 1

Une gaine de polyéthylène 35 peut être prévue autour de la gaine étanche 20.

Pour brancher les trois conducteurs, on dégage le champ opératoire du branchement comme suit. Après avoir déroulé les fils d'acier de l'armure interne 10 du câble, sur une longueur suffisante comme expliqué ci-dessus, on enfile de chaque côté le tronçon de gaine flexible 2 correspondant, vissé sur le manchon 1, et ladite bague de centrage 7 autour de la gaine étanche 20 ainsi dégagée. Après connexion, on rapproche l'un de l'autre les tronçons de gaine 2, 2′ en faisant glisser, sur chaque extrémité de câble, la bague 7 jusqu'au bord de la gaine 20.

Ledit premier cylindre 1a forme la partie du manchon qui recouvre ladite bague de centrage 7, laquelle bague est maintenue autour de l'extrémité libre de la gaine étanche 20 du câble par un cordon de soudure 31 qui la prolonge du côté du câble. Pour raccorder la fin de la gaine en polyéthylène 35 et le cordon de soudure 31, on enroule du ruban adhésif armé 36 jusqu'au diamètre extérieur de ladite gaine de polyéthylène 35 Après avoir soudé le manchon 1 en place autour de la bague de centrage 7 au moyen d'un deuxième cordon de soudure 32, en veillant à laisser dégagée l'ouverture 33, une frette en fils de cuivre 37 est enroulée autour dudit premier cylindre, autour dudit deuxième cordon de soudure 32, autour du ruban adhésif armé 36, et de l'extrémité de ladite gaine de polyéthylène 35

De l'autre côté du manchon 1, c'est-à-dire vers le milieu de la jonction, une coquille de plomb 4 est mise en place autour de ladite gaine flexible 2 et autour dudit deuxième cylindre 1b du manchon 1 par exemple, sous la forme d'un tube fendu soudé longitudinalement. Cette coquille de plomb 4 est soudée sur ledit deuxième cylindre dudit manchon 1.

Avantageusement, un feuillard en acier inoxydable 3 peut être interposé entre ladite gaine flexible 2 et ladite coquille de plomb 4, laquelle coquille peut être frettée par un feuillard et/ou du ruban adhésif armé 38 pour résister à la pression de l'huile 24

Des bourrages 6 et 9 sont ensuite mis en place de part et d'autre dudit cylindre central du manchon 1 respectivement du côté de la jonction et du côté du câble, pour rattraper le diamètre extérieur dudit cylindre central, afin d'offrir à l'armure interne à reconstituer 10 une surface lisse et sans protubérances radiales

Une fois l'armure interne 10 remise en place, un autre bourrage 11 est réalisé autour de celle-ci, pour rattraper les différences de diamètre extérieur de l'armure interne 10 et reconstituer une surface externe parfaitement cylindrique. Les ressorts hélicoïdaux 12 formant l'armure externe de la jonction sont alors mis en place autour du bourrage conique 11 et réunis entre eux par une soudure, et on recouvre l'ensemble avec du bitord de finition 13.

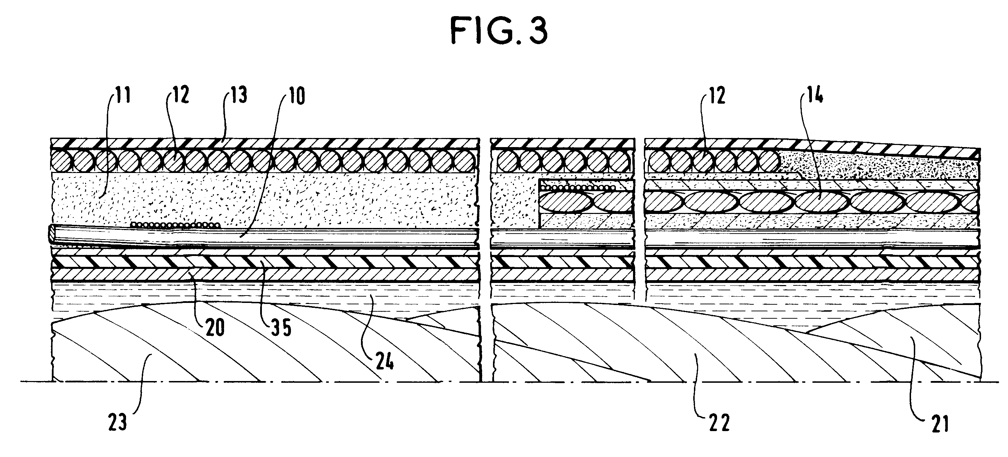

La figure 3 est une vue partielle de détail qui montre le recouvrement de l'armure externe 14 du câble par les ressorts hélicoïdaux 12 formant l'armure externe de la jonction. On retrouve le bitord extérieur de finition 13, le bourrage 11 entre les ressorts hélicoïdaux 12 et l'armure interne à pas long 10, et la gaine de polyéthylène 35 qui entoure la gaine étanche 20. Les autres couches en présence ne sont pas référencées, mais elles ne concernent pas l'invention proprement dite.

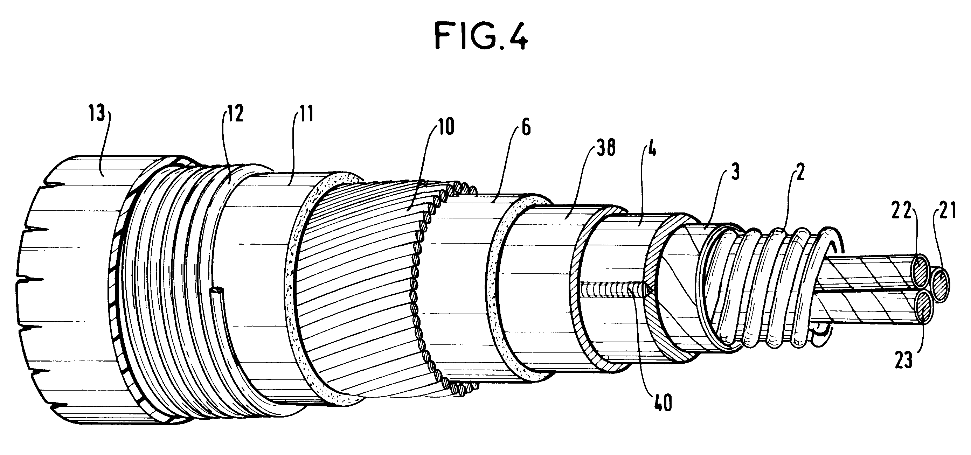

La figure 4 illustre les différentes couches entrant dans la composition de l'enveloppe des conducteurs au niveau de la jonction, c'est-à-dire entre les deux manchons de raccordement 1, dans le cas de l'exemple des figures précédentes. De l'intérieur vers l'extérieur, on trouve successivement les trois conducteurs isolés par du papier imprégné d'huile 21, 22, 23, la gaine flexible 2 en feuillard enroulé agrafé, le feuillard en acier inoxydable 3, la coquille de plomb 4 avec sa soudure longitudinale 40, le feuillard de frettage 38, le bourrage 6, l'armure interne à pas court 10, le bourrage 11, le ressort hélicoïdal 12 et enfin le bitord de finition 13.

La succession des opérations permettant de réaliser un exemple de jonction selon l'invention est maintenant résumée ci-après:

+ Préparation du câble

- Enlever le filin extérieur de protection sur une longueur suffisante, par exemple 12 mètres
- Ecarter et couper l'armure à pas court 14 sur cette longueur.
- Marquer un point de coupe au milieu de cette longueur.
- Fretter l'armure à pas long 10 ainsi dégagée, avec du ruban adhésif renforcé
- Couper le câble après avoir coupé l'alimentation en huile. Faire couler un peu d'huile de chaque côté du câble pour éliminer les déchets de coupe, et relever les extrémités du câble pour éviter les entrées d'air.
- Glisser les ressorts hélicoïdaux 12.
- Faire se recouvrir partiellement les câbles.
- Ecarter les armures à pas long 10 qui dépassent du ruban adhésif, ainsi que les filins et les feuillards galvanisés, et les mettre en attente.
- Glisser les pièces de raccord de la gaine plomb du câble au tube interlock 2 (lesdites pièces de raccord comprennent un manchon 1 et une bague de centrage 7 du manchon 1), ainsi que la bague intérieure 15 de raccordement des tubes interlock 2.
- Glisser les tubes interlock 2.
- Enlever les gaines de plomb
- Enlever les papiers isolants sur une certaine longueur.

+ Branchements des conducteurs.

Les branchements des différents conducteurs sont réalisés au moyen de serre-fils On doit ensuite limer les angles des pans de sertissage des serre-fils pour leur donner un profil cylindrique.

+ Reconstitution de l'isolation des conducteurs, au papier.

+ Raccordements des gaines de plomb étanches.

- Positionner les tubes interlock 2 avec leurs manchons 1 brasés.
- Ajuster la longueur des tubes interlock 2 côté non brasé pour obtenir un positionnement correct des manchons 1 sur la gaine de plomb.
- Souder la bague de centrage 7 sur la gaine de plomb du câble de façon étanche.
- Mettre en place le tube interlock 2
- Souder la bague de centrage 7, le manchon 1 et la gaine de plomb du câble. Il s'agit d'une soudure étanche 31. Prévoir un recouvrement de 50 mm au moins sur la gaine de plomb.
- Souder les tubes interlock 2 entre eux et à la bague intérieure 15.
- Supprimer les cannelures du tube interlock 2, par rubanage au moyen d'un feuillard de protection en inox 3. Arrêter ce feuillard par frette et soudure. Le feuillard de protection 3 peut également être en cuivre.
- Mettre en place la coquille de plomb 4 ouverte.
- Refermer la coquille 4 longitudinalement par soudure autogène
- Souder la coquille de plomb 4 sur le manchon 1.
- Vérifier l'étanchéité des soudures par branchement d'une installation de vide sur les orifices des manchons 1.

+ Renforcement et préparation des gaines étanches avant imprégnation.

- Tailler en cône la gaine polyéthylène 35 autour de la gaine de plomb du câble au voisinage de la bague de centrage 7.
- Reconstituer la gaine polyéthylène 35 avec du scotch armé 36.
- Ré-enrouler les feuillards du câble sur la soudure étanche.
- Arrêter les feuillards par une frette en fils de cuivre étamés ; les feuillards étaient en attente depuis la phase de préparation du câble.

On les ré-enroule par-dessus la gaine polyéthylène 35 du câble, et jusque par-dessus la soudure étanche 31

- Réaliser une soudure de renfort 32 sur le manchon et les feuillards.
- Exécuter une frette à spires jointives 37 sur la soudure de renfort 32.

+ Remplissage de la jonction avec de l'huile et bouchage par boulons soudés 30.

+ Raccordement des armures internes à pas long 10.

- Enrouler du ruban armé 6 entre les manchons 1 jusqu'au diamètre extérieur des manchons, et à l'extérieur des manchons, cinq couches de renfort sur les frettes de reconstitution des feuillards.
- Réaliser un cône 9 entre le manchon 1 et le câble avec des rubans mastic (scotchfil) et scotchrap alternés sur 500 mm. Le cône 9 "descend" progressivement du manchon vers le câble.
- Protéger l'ensemble par du ruban type "scotch-21".
- Mettre en place une couche de toile Jaconas pour faciliter la pose des armures à pas long 10.
- Recâbler l'armure interne à pas long 10 en la maintenant par des frettes Après repérage des points de croisement des tirants, on les raccorde par des tendeurs à filetage droite-gauche ou ridoirs à pas inverse 25. Les tendeurs peuvent être décalés.

+ Raccordement des armures externes à pas court 14.

- Ajuster le diamètre de la jonction à celuui des ressorts 12 par rubanage pour obtenir un matelas cylindrique 11 recouvrant également les filins restant sur l'armure à pas court 14 du câble sur environ 750 mm, réalisé comme le cône 9 entre le manchon 1 et le câble.
- Glisser les ressorts 12 par dessus le matelas ainsi réalisé
- Positionner et souder entre eux à l'arc les ressorts 12. Les ressorts doivent recouvrir l'armure à pas court 14 du câble sur environ 750 mm.

+ Mise en place du bitord de protection 13 de l'ensemble

- Fretter l'armure constituée par les ressorts 12 avec un bitord 13. Reconstituer les filins du câble, après avoir réalisé à chaque extrémité des ressorts une transition conique de 200 mm environ à l'aide de toile Jaconas.
- Arrêter le bitord 13 par un frettage au scotch armé.

**Revendications**

1. Jonction souple pour un câble sous-marin du type comportant des conducteurs isolés (21, 22, 23) par du papier imprégné d'huile sous pression (24) dans une gaine étanche (20) protégée par au moins une armure caractérisée en ce qu'elle comprend une gaine flexilbe (2) raccordée, à chacun des deux côtés des branchements (41, 42, 43) entre lesdits conducteurs, à deux manchons de raccordement (1, 1′) rigides engageables autour d'une bague de centrage (7, 7′) soudée sur la gaine étanche (20) du câble puis soudée sur lesdits manchons, ladite gaine flexible étant divisée en deux tronçons (2,2′) raccordés entre eux au moyen d'une bague intérieure (15) qu'ils recouvrent avant d'être soudés ensemble et recouverte d'une coquille tubulaire (4) formant gaine étanche soudée de chaque côté sur lesdits manchons de raccordement (1, 1′), lesdits manchons comportant au moins un orifice (33) obturable au moyen d'un bouchon (30) pour la mise sous pression d'huile de la jonction.

2. Jonction selon la revendication 1 caractérisée en ce que ladite armure, dite interne (10), est constituée de fils de métal enroulés à pas long le long du câble, et est reconstituée par-dessus la jonction par raccordement desdits fils au moyen de ridoirs à pas inverses (25).

3. Jonction selon la revendication 2 caractérisée en ce que ledit câble comporte en outre une armure externe à pas court (14), reconstituée au niveau de la jonction par des ressorts hélicoïdaux soudés bout à bout (12) recouvrant ladite armure externe du câble sur une certaine longueur de chaque côté de ladite jonction, ladite armure externe (14) étant placée à l'extérieur de ladite armure interne (10).

4. Jonction selon l'une quelconque des revendications précédentes, caractérisée en ce que ladite gaine flexible (2, 2′) est formée à partir d'un feuillard enroulé agrafé

5. Jonction selon la revendication 4, caractérisée en ce que lesdits manchons de raccordement (1, 1') et ladite bague intérieure (15) sont munis de filetages au pas d'enroulement dudit feuillard enroulé agrafé en leurs parties à raccorder à ladite gaine flexible (2)

6. Jonction selon l'une quelconque des revendications precédentes, caractérisée en ce que lesdits branchements (41, 42, 43) entre conducteurs sont décalés les uns des autres dans le sens longitudinal.

7. Jonction selon l'une quelconque des revendications précédentes, caractérisée en ce que ladite coquille tubulaire (4) est refermée sur ladite gaine flexible par soudage longitudinal (40).

8. Jonction selon l'une quelconque des revendications précédentes, caractérisée en ce que ladite conquille tubulaire (4) est en plomb

**Claims**

1. A flexible splice for a submarine cable of the type comprising a plurality of conductors (21, 22, 23) insulated by paper impregnated with oil under pressure (24) inside an oil-tight sheath (20) protected by at least one layer of armoring, characterized in that it comprises a flexible sheath (2) connected on either side of the interconnections (41, 42, 43) between said conductors to two rigid connection sleeves (1, 1') fittable around a centering ring (7, 7') bonded to the oil-tight sheath (20) of the cable and then bonded to said sleeves, said flexible sheath being divided into two length (2, 2') which are interconnected by means of an inner ring (15) which they overlap prior to being bonded together and which is covered with a tubular shell (4) constituting an oil-tight sheath which is bonded at each end to said connection sleeves (1, 1'), said sleeves including at least one orifice (33) closable by means of a stopper (30) in order to put the splice under oil pressure.

2. A splice according to claim 1, characterized in that said armoring (10), referred to as "inner" armoring, is constituted by metal wires wound at a long pitch along the cable, and is reconstituted over the junction by interconnecting said wires by turnbuckle means (25).

3. A splice according to claim 2, characterized in that said cable further includes an outer layer of short pitch armoring (14) which is reconstituted over the splice by helical springs (12) which are welded end-to-end, said springs covering said outer armoring of the cable over a certain length on either side of said splice, said outer armoring (14) being placed outside said inner armoring (10).

4. A splice according to any one of the preceding claims, characterized in that said flexible sheath (2, 2') is made up from a folded-seam helically-wound foil.

5. A splice according to claim 4, characterized in that said connection sleeves (1, 1') and said inner ring (15) are provided with screw threads at the winding pitch of said folded-seam helically-wound foil on those portions thereof which are to be connected to said flexible sheath.

6. A splice according to any one of the preceding claims, characterized in that said interconnections (41, 42, 43) between the conductors are offset from one another in the longitudinal direction.

7. A splice according to any one of the preceding claims, characterized in that said tubular shell (4) is enclosed over said flexible sheath by longitudinal welding (40).

8. A splice according to any one of the preceding claims, characterized in that said tubular shell (4) is made of lead.

**Patentansprüche**

1. Biegsame Verbindung für ein Unterseekabel von der Art, das Leiter (21, 22, 23) aufweist, die durch mit unter Druck stehendem Öl getränktes Papier (24) in einer dichten Hülle (20) isoliert sind, die von mindestens einer Bewehrung geschützt wird, dadurch gekennzeichnet, daß sie eine biegsame Hülle (2) aufweist, die an jeder der beiden Seiten der Anschlußstellen (41, 42, 43) zwischen den Leitern an zwei starre Anschlußmuffen (1, 1') angeschlossen ist, die auf einen Zentrierring (7, 7') aufgeschoben werden können, der auf die dichte Hülle (20) des Kabels und dann auf diese Muffen aufgeschweißt ist, wobei die biegsame Hülle in zwei Abschnitte (2, 2') aufgeteilt ist, die untereinander mittels eines Innenrings (15) verbunden sind, den sie bedecken, bevor sie zusammengeschweißt und von einer rohrförmigen Muschel (4) bedeckt werden, die eine dichte Hülle bildet, die an jeder Seite auf die Anschlußmuffen (1, 1') aufgeschweißt ist, wobei diese Muffen mindestens eine Öffnung (33) aufweisen, die mittels eines Stopfens (30) verschlossen werden kann, um die Verbindung unter Öldruck zu setzen.

2. Verbindung nach Anspruch 1, dadurch gekennzeichnet, daß die "innere" Bewehrung (10) aus Metalldrähten besteht, die mit langem Wicklungsschritt um das Kabel aufgerollt sind, und oberhalb der Verbindung wiederhergestellt wird durch Verbindung dieser Drähte mittels Spannschlössern mit umgekehrtem Schritt (25).

3. Verbindung nach Anspruch 2, dadurch gekennzeichnet, daß dieses Kabel weiter eine "äußere" Bewehrung mit kurzem Wicklungsschritt (14) aufweist, die in Höhe der Verbindung durch aneinander anstoßend gelötete spiralförmige Federn (12) wiederhergestellt wird, die diese äußere Kabelbewehrung über eine gewisse Länge zu beiden Seiten dieser Verbindung bedeckt, wobei die äußere Bewehrung (14) außerhalb der inneren Bewehrung (10) angeordnet ist.

4. Verbindung nach einem beliebigen der vorhergehenden Ansprüche, dadurch gekennzeichnet, daß die biegsame Hülle (2, 2') aus einem aufgerollten gehefteten Eisenband gebildet wird.

5. Verbindung nach Anspruch 4, dadurch gekennzeichnet, daß die Anschlußmuffen (1, 1') und der Innenring (15) an ihren mit der biegsamen Hülle zu verbindenden Bereichen mit Gewinden entsprechend dem Wickelschritt dieses aufgerollten gehefteten Eisenbands versehen sind.

6. Verbindung nach einem beliebigen der vorhergehenden Ansprüche, dadurch gekennzeichnet, daß die Anschlußstellen (41, 42, 43) zwischen den Leitern in Längsrichtung gegeneinander verschoben liegen.

7. Verbindung nach einem beliebigen der vorhergehenden Ansprüche, dadurch gekennzeichnet, daß diese rohrförmige Muschel (4) über der biegsamen Hülle durch Längsverschweißung (40) geschlossen ist.

8. Verbindung nach einem beliebigen der vorhergehenden Ansprüche, dadurch gekennzeichnet, daß die rohrförmige Muschel (4) aus Blei ist.

# FIG.1

EP 0 281 896 B1

# FIG.2

EP 0 281 896 B1

# FIG.3

EP 0 281 896 B1

FIG.4